# EUROPEAN PATENT SPECIFICATION

(11) **EP 3 804 506 B1**
(45) Date of publication and mention of the grant of the patent: **13.09.2023**
(21) Application number: 20200474.3
(22) Date of filing: 07.10.2020
(51) Int. Cl.: A01G 25/06, A01G 25/16, A01C 21/00

(54) **TWIN ROW GROWING METHOD WITH SUBIRRIGATION**
ZWEIREIHIGES ANBAUVERFAHREN MIT UNTERBEWÄSSERUNG
MÉTHODE DE CULTURE EN DOUBLE RANGÉE AVEC SUBIRRIGATION

(30) Priority: 08.10.2019 IT 201900018176
(43) Date of publication of application: 14.04.2021
(73) Proprietor: Underdrip SRL, 26030 Malagnino (CR) (IT)
(72) Inventor: ROSSI, Giuseppe Giorgio, 26030 Malagnino (CR) (IT)
(74) Representative: Mari, Marco Giovanni

(56) References cited:
- EP-A1- 2 745 667
- US-A- 2 768 028
- US-A1- 2004 200 363

## Description

### Technical field

The present invention concerns the agricultural field.

In particular, the invention concerns a twin row growing method with subirrigation, i.e., a growing method for crops sown in rows, in particular in twin rows. In the description below, twin row growing (or growing in twinned rows) means, more generally with respect to the strict literal definition, that a twin row can be composed of two or more rows of seeds, also a quincunx, and sowing in twin rows is obtained when the sowing distance between the rows of seeds of each twin row is less than the distance between the external rows of two adjacent twin rows.

Subirrigation generally means an irrigation method in which the water is supplied to the crops through parallel drip hoses, placed at regular intervals in the ground at a certain depth, so as to remain underneath the root system of the plant grown and without interfering with any equipment used to prepare the planting ground.

### Prior art

The patent application EP 2 745 667 A1 (priority document No. CR2012A000025) describes a subirrigation system particularly effective for planting in rows, comprising the steps of:
- arranging, underneath an agricultural land, parallel to one another and at regular intervals, a plurality of drip hoses for the underground distribution of water;
- sowing seeds in parallel rows in said flat agricultural land;
- introducing water into said drip hoses,
where said step of arranging, underneath an agricultural land, parallel to one another and at regular intervals, a plurality of drip hoses for the underground distribution of water comprises the step of memorizing the position of said drip hoses and that said step of sowing the seeds in parallel rows comprises the prior step of identifying the position of said hoses and the subsequent step of sowing the seeds at these hoses, maintaining the same regular intervals, so that the water distributed by means of subirrigation reaches the roots of plants born from said seeds without totally saturating the agricultural land comprised between said hoses.

However, this method does not tackle the problem of growing in twin rows, a technique used in particular for herbaceous crops, such as pulses, alfalfa, vegetables, etc., or of no-till sowing of crops sown in twin rows, i.e. on land that is not tilled in advance, and containing plant residues from previous crops and wild herbs.

The document US 2004/200363 A1 discloses a potato growing method where the plants are arranged in rows in beds on the ground and drip hoses for subirrigation are arranged between the rows of plants of each bed. The hoses are placed on top of the seeds and are positioned each time sowing takes place and do not remain in position in the ground, as growing in beds requires the ground to be heavily worked.

The document CN 107 996 340 A discloses a sugar cane growing method where the plants are arranged in rows in beds and drip hoses for subirrigation and applying fertilizers and pesticides are arranged between the rows of plants of each bed. The ground is not tilled frequently to grow sugar cane as the roots are perennial and therefore there is no need to identify the position of the hoses.

The document CN 105 706 728 A discloses a sugar cane growing method where the plants are arranged in rows in beds and drip hoses for subirrigation and applying fertilizers and pesticides are arranged between the rows of plants of each bed.

### Presentation of the invention

The object of the present invention is to eliminate the aforesaid defects.

In particular, the object of the invention is to define a twin row growing method with subirrigation that ensures optimal management of the irrigation water, of any fertilizers, and of the agricultural environment, while promoting maximum development of the plants grown in the shortest possible time.

A further object of the invention is to define a twin row growing method with subirrigation that maintains the drainage capacity of the ground in relation to rainwater even during the supply of irrigation water and even when the plants are not arranged in rows above the hoses, that reduces labour and energy costs and that does not require the ground to be tilled or plant residues from previous crops to be removed before sowing.

These objects are achieved with a twin row growing method with subirrigation, comprising the steps of:
- arranging stably before sowing, underneath a flat agricultural land piano, parallel to one another and at regular intervals, at a specific depth, a plurality of drip hoses for the underground distribution of water;
- memorizing in time the position of said drip hoses;
- identifying before sowing the position of said previously arranged hoses;
- sowing seeds in twin rows composed of parallel rows in said flat agricultural land, at a lesser depth than said specific depth, so that the centreline of each twin row coincides with the axis of each single hose, and so as to leave a desired distance between external rows of seeds of adjacent twin rows;
- introducing water into said drip hoses, so that the water distributed by means of subirrigation reaches the roots of plants born from said seeds belonging to each twin row, leaving a strip of agricultural land, of a lesser width than said desired distance between said hoses, without irrigation water;
- detecting the moisture of the soil at various depths and at various distances from the single hoses during the introduction of water into said hoses, and the step of dosing the introduction of water based on the moisture detected, so as to verify that said strip of land without a supply of water remains between these hoses.

Further, the growing method provides that the desired distance between the external rows of seeds of adjacent twin rows is greater than the distance between the rows of seeds of each twin row.

The growing method according to the present invention offers numerous advantages:
- all the plants are irrigated correctly, without the water ever totally involving the strip of land between the hoses, i.e., without ever reaching field capacity or saturation of said strip of land;
- only the strip of land on which the roots of the plants grown extend is watered, so that the amount of water required is considerably reduced;
- the saving of water also produces less waste and fewer salts dissolved in the ground and in the aquifer;
- there is a saving in fertilizers and nutrients carried with the water, as they too reach the root system of the plants directly, thereby reducing spending for chemical products and minimizing environmental pollution;
- the water delivered by the hoses is transmitted directly upward by the negative water potential created around the roots;
- the strip of ground comprised between the hoses is not completely saturated with water and maintains its porosity, so as to guarantee drainage of any rainwater;
- a cultivation practice that is sustainable for the environment, operators and the agricultural sector is promoted;
- the development of weeds is limited;
- two crops can be grown in close succession;
- it saves energy both due to the lower power of the pumps and due to the reduction in the use of fuel made possible by no-till sowing, without tilling the land in advance;
- it promotes the development of small animals useful to the soil, such as earthworms, as they are not disturbed by ploughing or by ground saturation.

### Brief description of the drawings

The advantages of the invention will be more apparent below in the description of a preferred embodiment, provided by way of nonlimiting example, and with the aid of the figures, where:

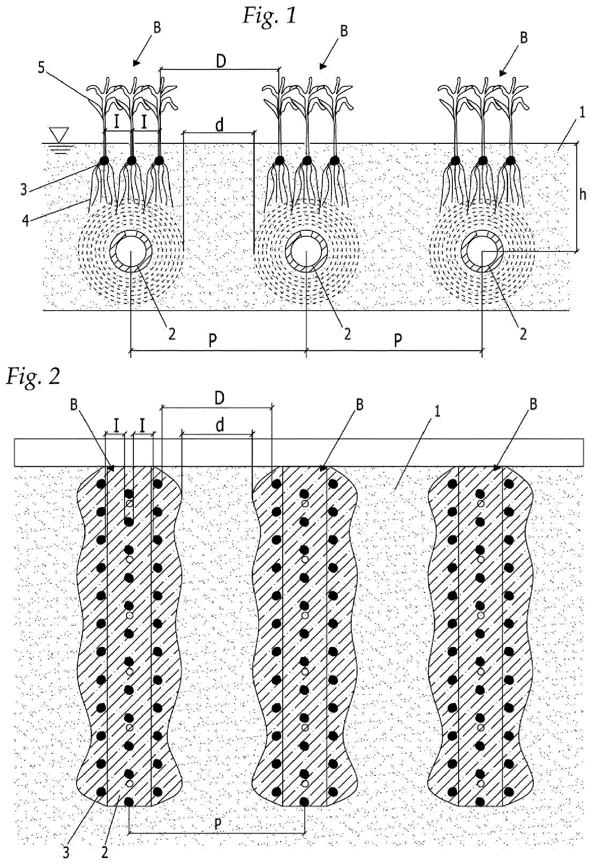

Figs. 1 and 2 represent, respectively in a plan view and in a schematic cross sectional view, the growing method in rows with subirrigation according to the invention.

### Detailed description of an example of preferred embodiment of the invention

With reference to the figures, there is illustrated ground to which the twin row growing method with subirrigation is applied.

The first step provides for arranging, underneath an agricultural land 1, according to the prior art, at a certain specific depth h from ground level, a series of drip hoses 2 for the underground distribution of water, memorizing and storing in time the information relating to their position.

Said hoses 2 are connected to a water distribution header and are arranged parallel to one another, spaced at regular intervals P.

The method then provides for the step of identifying the position of said hoses 2 and the subsequent step of sowing seeds 3 in twin rows B, leaving a sowing distance I between the rows of seeds of each twin row and a desired distance D between the external rows of adjacent twin rows. The desired distance D will be greater than the distance I.

The method is characterized in that the centreline of each twin row coincides with the axis of each single hose, so that the water distributed by means of subirrigation reaches the roots 4 of plants 5 born from said seeds 3 belonging to each twin row B, without involving or totally saturating the agricultural land comprised between said hoses. In other words, the method provides that the water distributed by means of subirrigation reaches the roots 4 of each twin row B above the related hose 2, but a strip of agricultural land of a lesser width d than D, in which the ground is not involved by the irrigation water and does not reach saturation, always remains.

The regular intervals P at which the hoses are arranged, the sowing distance I between the rows of seeds 3 of each twin row B, and the desired distance D between the external rows of two adjacent twin rows B and the strip of agricultural land of width d can be chosen at will, within the scope of the solution to the technical problem set forth herein.

The number of rows for each twin row B, and the layout of the seeds 3 for each row can also be chosen at will, based on the type of plant to be grown, the ground and convenience, without however departing from the scope of the present invention.

The possibility of freely choosing the sowing distance I between the rows of seeds 3 of each twin row B also allows no-till sowing without the plant residues from previous crops interfering with the new crops.

To optimize the width d of the strip of agricultural land in which the ground is not involved by the irrigation water and never reaches saturation, moisture measuring instruments of known type (not illustrated) can be installed, positioned at different depths and at different distances from the hoses 2, so as to be able to accurately dose the water to be supplied and check that the strip of agricultural land of width d always remains free of irrigation water and never reaches the condition of saturation.

## Claims

1. Twin row growing method with subirrigation, comprising the steps of:
- arranging stably before sowing, underneath a flat agricultural land (1), parallel to one another and at regular intervals, at a specific depth (h), a plurality of drip hoses (2) for the underground distribution of water;
- memorizing in time the position of said drip hoses;
- identifying in time the position of said previously arranged hoses (2);
- sowing seeds (3) in twin rows (B) composed of parallel rows in said flat agricultural land (1), at a lesser depth than said specific depth (h), so that the centreline of each twin row (B) coincides with the axis of each single hose (2), and so as to leave a desired distance (D) between external rows of seeds (3) of adjacent twin rows (B);
- introducing water into said drip hoses (2), so that the water distributed by means of subirrigation reaches the roots (4) of plants (5) born from said seeds (3) belonging to each twin row (B), leaving a strip (d) of agricultural land, of a lesser width than said desired distance (D) between said hoses without irrigation water;
- detecting the moisture of the soil at various depths and at various distances from the single hoses (2) during the introduction of water into said hoses (2), and the step of dosing the introduction of water based on the moisture detected, so as to verify that said strip (d) of land without a supply of water remains between these hoses.

2. Subirrigation method according to claim 1, **characterized in that** the desired distance (D) between the external rows of seeds (3) of adjacent twin rows (B) is greater than the distance (I) between the rows of seeds (3) of each twin row (B).

## Patentansprüche

1. Zweireihiges Anbauverfahren mit Unterbewässerung, umfassend folgende Schritte:
Stabiles Anordnen vor der Aussaat einer Vielzahl von Tropfschläuchen (2) zur unterirdischen Verteilung von Wasser unter einer ebenen landwirtschaftlichen Fläche (1) parallel zueinander und in regelmäßigen Abständen in einer bestimmten Tiefe (h);
- zur rechten Zeit Speicherung der Position der besagten Tropfschläuche;
- zur rechten Zeit Identifizierung der Position der besagten zuvor angeordneten Schläuche (2);
- Aussaat von Saatgut (3) in Doppelreihen (B), bestehend aus parallelen Reihen, auf der besagten ebenen landwirtschaftlichen Fläche (1), in einer geringeren Tiefe als der besagten spezifischen Tiefe (h), so dass die Mittellinie jeder Doppelreihe (B) mit der Achse jedes einzelnen Schlauchs (2) übereinstimmt, und so dass ein gewünschter Abstand (D) zwischen den äußeren Reihen des Saatguts (3) benachbarter Doppelreihen (B) verbleibt;
- Zufuhr von Wasser in die besagten Tropfschläuche (2), so dass das mittels Unterbewässerung verteilte Wasser die Wurzeln (4) der Pflanzen (5) erreicht, die aus dem zu jeder Doppelreihe (B) gehörenden besagten Saatgut (3) hervorgegangen sind, wobei ein Streifen (d) landwirtschaftlicher Fläche mit einer geringeren Breite als der besagte gewünschte Abstand (D) zwischen den besagten Schläuchen ohne Bewässerungswasser verbleibt;
- Erfassen der Bodenfeuchtigkeit in verschiedenen Tiefen und in verschiedenen Abständen von den einzelnen Schläuchen (2) während der Wasserzufuhr in die besagten Schläuche (2) und Dosieren der Wasserzufuhr aufgrund der erfassten Feuchtigkeit, um zu überprüfen, ob der besagte Streifen (d) der Fläche ohne Wasserzufuhr zwischen diesen Schläuchen verbleibt.

2. Unterbewässerungsverfahren gemäß Anspruch 1, **dadurch gekennzeichnet, dass** der gewünschte Abstand (D) zwischen den äußeren Saatgutreihen (3) benachbarter Doppelreihen (B) größer ist als der Abstand (I) zwischen den Saatgutreihen (3) jeder Doppelreihe (B).

## Revendications

1. Méthode de culture en double rangée avec subirrigation, comprenant les étapes suivantes :
- disposer de manière stable avant le semis, sous un terrain agricole plat (1), parallèlement les uns aux autres et à intervalles réguliers, à une profondeur déterminée (h), une multitude de tuyaux goutte à goutte (2) pour la distribution souterraine de l'eau ;
- mémoriser dans le temps la position desdits tuyaux goutte à goutte ;
- identifier dans le temps la position desdits tuyaux (2) préalablement disposés ;
- semer des graines (3) en double rangée (B) composée de rangées parallèles dans ledit terrain agricole plat (1), à une profondeur inférieure à ladite profondeur spécifique (h), de sorte que la ligne médiane de chaque double rangée (B) coïncide avec l'axe de chaque tuyau individuel (2), et de manière à laisser une distance souhaitée (D) entre les rangées extérieures de graines (3) des doubles rangées (B) adjacentes ;
- introduire de l'eau dans lesdits tuyaux goutte à goutte (2), de sorte que l'eau distribuée par subirrigation atteigne les racines (4) des plantes (5) nées desdites graines (3) appartenant à chaque double rangée (B), en laissant une bande (d) de terrain agricole, d'une largeur inférieure à ladite distance souhaitée (D) entre lesdits tuyaux sans eau pour l'irrigation.
- détecter l'humidité du sol à différentes profondeurs et à différentes distances des tuyaux individuels (2) pendant l'introduction de l'eau dans lesdits tuyaux (2), et l'étape consistant à doser l'introduction de l'eau en fonction de l'humidité détectée, de manière à vérifier que ladite bande (d) de terrain sans apport d'eau reste entre ces tuyaux.

2. Méthode de subirrigation selon la revendication 1, **caractérisée par le fait que** la distance souhaitée (D) entre les rangées extérieures de graines (3) de doubles rangées adjacentes (B) est supérieure à la distance (I) entre les rangées de graines (3) de chaque double rangée (B).
